# EUROPÄISCHE PATENTSCHRIFT

(11) **EP 0 682 645 B1**
(45) Veröffentlichungstag und Bekanntmachung des Hinweises auf die Patenterteilung: **02.06.1999**
(21) Anmeldenummer: 95902045.4
(22) Anmeldetag: 29.11.1994
(51) Int. Cl.: C02F 11/12, B01D 33/04

(54) **VORRICHTUNG ZUR ENTWÄSSERUNG VON SUSPENSIONEN**
DEVICE FOR DEWATERING SUSPENSIONS
DISPOSITIF D'ASSECHEMENT DE SUSPENSIONS

(30) Priorität: 07.12.1993 DE 4341580
(43) Veröffentlichungstag der Anmeldung: 22.11.1995
(73) Patentinhaber: Gebr. Bellmer GmbH + Co KG Maschinenfabrik, 75223 Niefern-Öschelbronn (DE)
(72) Erfinder: KOLMAR, Ulrich, D-75181 Pforzheim (DE); MATERN, Harald, D-75339 Höfen (DE); WENZEL, Lothar, D-75015 Bretten (DE)
(74) Vertreter: Frank, Gerhard, Dipl.-Phys.
(86) Internationale Anmeldenummer: DE9401437
(87) Internationale Veröffentlichungsnummer: WO9515925

(56) Entgegenhaltungen:
- EP-A- 0 103 565
- WO-A-82/02686
- DE-A- 3 221 435
- FR-A- 2 673 933
- PATENT ABSTRACTS OF JAPAN, unexamined applications, Sektion C, Band 6, Nr. 174, ver!ffentlicht 1982, 08 September, THE PATENT OFFICE JAPANESE GOVERNMENT, Seite 37 C 123; & JP,A,57 087 895 (HITACHI).

## Beschreibung

Die Erfindung betrifft eine Vorrichtung gemäß dem Oberbegriff des Patentanspruchs 1.

Es handelt sich insbesondere um Pressen mit einer Vielzahl von Preßwalzen, wobei durch die S-förmige Umschlingung der Walzen durch die Filterbänder eine sukzessive Trocknung der Suspension mit zunehmender Walzenanzahl erreicht wird.

Derartige Pressen sind in vielfältigen Ausführungen im Einsatz, sie unterscheiden sich alle im wesentlichen durch die relative Zuordnung der aufeinanderfolgenden Walzen, deren Durchmesser und Konstruktionsart und die Art der Führung der Filterbänder um die Walzen, insbesondere die Bemessung des Umschlingungswinkels der einzelnen Walzen durch die Filterbänder.

Die zu entwässernde Suspension ist je nach Einsatzbereich verschieden, es können verschiedene Schlämme, z.B. Kommunalschlämme, entwässert werden, die wiederum einen mehr oder weniger hohen Vorentwässerungsgrad aufweisen. Auch die Auspressung von Früchten oder Fruchbestandteilen wird mit solchen Filterpressen durchgeführt.

Hierbei hat sich gezeigt, daß ein bestimmter Pressentyp, d.h. eine Presse mit bestimmter Walzenkonfiguration und Filterbandführung in der Regel ein optimales Betriebsergebnis, d.h. im allgemeinen einen maximalen Trocknungsgrad bei spezifischen Suspensionen erzielen wird bzw. bei bestimmten Suspensionszusammensetzungen. Die Vielzahl von konstruktiven Varianten solcher Pressen, die auf dem Markt sind, dienen daher auch in der Regel zur Erreichung optimaler Preßergebnisse für spezifische oder spezifisch eingestellte Suspensionen, deren Vortrocknungsrad, makromolekulares Gefüge ggf. unter Zugabe von Zusatzstoffen in einer bestimmten Bandbreite liegt.

Ein erstes Beispiel für eine derartige Entwässerungsvorrichtung zeigt die DE-A-32 21 435. Es handelt sich hierbei um eine Siebbandpresse zum Entwässern eingedickter Klärschlämme mit zwei umlaufenden Endlos-Siebbändern. Diese Anlage besteht aus einem Walzenentwässerungsteil und einem Press-Entwässerungsteil, vor und hinter dem letzteren sind zwei starr miteinander verbundene Walzen vorgesehen, die in Richtung der Verbindungsgeraden zwischen ihren Achsen linear verschiebbar sind. Diese Verschiebung der Walzen dient zur Anpassung des kontinuierlich durchlaufenden Pressvorganges im Walzenentwässerungsteil an den stationär ablaufenden Pressvorgang im Pressentwässerungsteil, sie dienen also sozusagen als Puffer für die durchlaufenden Siebbänder, um einen insgesamt kontinuierlichen Betrieb der Anlage zu ermöglichen.

Ein zweites Beispiel einer Siebbandpresse zeigt die WO-A-82/02686. Hierbei geht es in gewissem Mass bereits um die Anpassung einer Bandpresse an verschiedene Gegebenheiten bei unterschiedlichem Pressgut. Die vorbekannte Lösung sieht hierbei eine (einzige) Primärrolle grösseren Durchmessers vor, an die mehrere Pressrollen radial anpressbar sind, wobei diese radiale Anpressung für jede Pressrolle individuell erfolgen kann. Eine Verbesserung des Pressergebnisses soll ausserdem dadurch erreicht werden, dass die Hauptwalze und die Presswalzen mit einem elastomeren Material belegt sind.

Planung und Bau spezifischer Pressenkonfigurationen für bestimmte Einsatzzwecke sind jedoch zunehmend aufwendig und solche Pressen wegen der beschriebenen "Spezialisteneigenschaft" relativ kostspielig.

Es ist daher Aufgabe der Erfindung, eine Presse einfachster Bauart zu schaffen, die durch einfache, schnelle und somit kostengünstige Modifikationen im Aufbau ein breites Anwendungsspektrum abdeckt, d.h. daß mit einer einfachen Grundauslegung der erfindungsgemäßen Vorrichtung eine universell einsetzbare Presse geschaffen wird, die in einem weiten Bereich für optimale Suspensionsentwässerung mit besonders gutem Kosten-/Nutzen-Verhältnis sorgt.

Erfindungsgemäß wird diese Aufgabe durch den kennzeichnenden Teil des Patentanspruchs 1 gelöst.

Die Grundkonzeption der Erfindung besteht also im wesentlichen darin, daß eine Grundkomponente der Presse aus einem mittels definierter Verschwenkung und Verschiebung relativ zueinander einstellbaren Walzenpaar besteht, das einen Preßspalt zwischen sich einschließt, und das die gleichzeitige Ausnutzung sowohl der Linienpressung als auch der Flächenpressung zur Entwässerung der Suspension ermöglicht, wobei sowohl der absolute Wert dieser Presswirkung als auch das Verhältnis von Linienpressung zu Flächenpressung durch die veränderbare Zuordnung der Walzen des Walzenpaares in einem weiten Bereich einfach einstellbar ist. Vorzugsweise ist der Umschlingungswinkel beider Walzen des Walzenpaares über 180° gewählt.

Es hat sich gezeigt, daß abhängig von dem zu entwässernden Gut spezifische Kombinationen von Linienpressung/Flächenpressung zu einem optimalen Preßergebnis, d.h. zu einem maximalen Trocknungsgrad führen. Diese Kombination muß nicht für alle Trocknungsgrade des vorentwässerten Gutes gleich sein, d.h. auch bei einer vorgegebenen Suspension kann es beispielsweise erforderlich sein, mit zunehmendem Trocknungsgrad der Suspension beim Durchlaufen von mehreren Walzenpaaren das genannte Verhältnis Flächenpressung/Linienpressung zu variieren, beispielsweise in dem Sinn, daß mit zunehmendem Trocknungsgrad die Linienpressung eine zunehmende Rolle spielt, wogegen die Flächenpressung in den Hintergrund tritt oder umgekehrt.

Diese Einstellmöglichkeiten auf die "Entwässerungscharakteristik" des interessierenden Gutes bzw. der jeweiligen Suspension gestatten eine Optimierung des Preßergebnisses nach jedem Walzenpaar, so daß anstelle der bisher vorgesehenen Vielzahl von Walzen für einen Großteil der industriellen und kommunalen Anwendungen bereits drei Walzenpaare zu sehr guten Preßergebnissen führen, was die Wirtschaftlichkeit der erfindungsgemäßen Vorrichtung besonders herausstellt.

Selbstverständlich können Anordnungen solcher Walzenpaare auch andere, bekannte Walzenanordnungen vor- oder nachgeschaltet sein, wenn spezifische Aufgaben dies erfordern.

Erfindungsgemäss wird der Pressspalt und die von diesem ausgeübte Linienpressung mit Hilfe eines kraftbeaufschlagten Schwingarms eingestellt, an dem die eine Walze gehalten ist, wogegen die andere Walze tangential verschiebbar und festsetzbar ist, wodurch der Umschlingungswinkel und damit die Flächenpressung einstellbar ist, die die beiden Walzen im Umschlingungsbereich auf das zu entwässernde Gut ausüben.

Die variable Kraftbeaufschlagung der verschwenkbaren Walze kann hierbei durch eine separate Vorrichtung, aber auch einfach durch eine geeignete Vorgabe des Bandzugs der Filterbänder erfolgen, wenn hierdurch ein geeignetes Drehmoment auf den Schwingarm erzeugt wird.

Mehrere solcher Walzenpaare können an gemeinsamen Rahmen angeordnet sein, es können jedoch auch separate Baueinheiten verwendet werden, die jeweils mit Schwingarm und Verschiebungsmöglichkeiten für die beiden Walzen ausgestattet sind, so daß solche Baueinheiten oder Baumoduln in geeignete Rahmen oder Halteeinrichtungen der Presse einfach montierbar und auch wieder demontierbar sind und somit eine Anpassung auf das spezifische Entwässerungsproblem mit wenigen Handgriffen möglich ist.

Eine Vielzahl von weitern vorteilhaften Ausgestaltungen ist den Unteransprüchen zu entnehmen. Mehrere solche Ausgestaltungen werden nun anhand von Zeichnungen noch im einzelnen erläutert. Es zeigen:
- Fig. 1: eine Seitenansicht einer Presse mit einer ersten bevorzugten Anordnung von Walzenpaaren,
- Fig. 2: eine schematische Darstellung der grundsätzlich möglichen Einstellung der beiden Walzen eines Walzenpaares relativ zueinander,
- Fig. 3: eine Seitenansicht eines weiteren Beispiels mit abgehobener Eingangswalze zur Aufhebung des Preßspaltes,
- Fig. 4-10: Seitenansichten von erfindungsgemäßen Vorrichtungen mit mindestens zwei Walzenpaaren und Zusatzeinrichtungen zur Entwässerung,
- Fig. 11: eine Vorderansicht einer Presse im Bereich der Preßgutaufgabe.

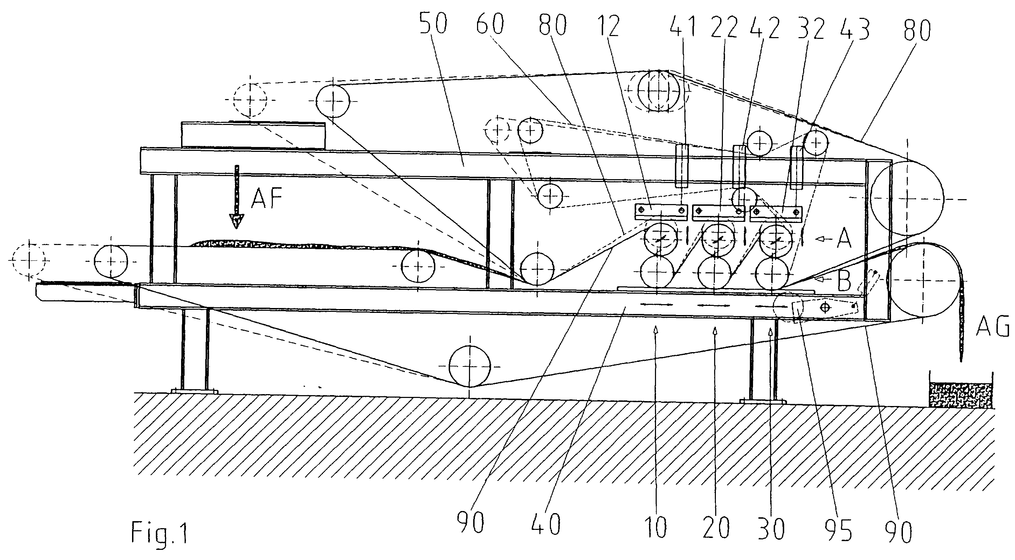

Die in Fig. 1 im Schnitt oder Seitenansicht dargestellte Presse besteht in üblicher Weise aus einem oberen Filterband 80 und einem unteren Filterband 90, die über eine Vielzahl von Preßwalzen und Umlenkwalzen jeweils endlos geführt sind. Die konstruktiven Maßnahmen zur Führung dieser Filterbänder im einzelnen und zu deren Spannung sind im Stand der Technik bekannt und brauchen hier nicht erläutert zu werden.

In einer Aufgabestation AF wird das (ggf. vorentwässerte) Preßgut auf das untere Filterband 90 aufgegeben und wird dann durch eine Kombination von drei Preßwalzenpaaren 10, 20, 30 geführt, und schließlich wird das entwässerte Gut in eine Abgabestation AG ausgeworfen und durch geeignete Mittel abtransportiert.

Jedes der Preßwalzenpaare 10, 20, 30 besteht aus einer oberen Walze ...A und einer unteren Walze ...B. Beim dargestellten Ausführungsbeispiel ist die jeweils obere Walze ...A an einem Schwingarm 12, 22, 32 gehalten, dessen eine Achse mit dem oberen Rahmen 50 der Presse verbunden ist (nicht dargestellt) und an dessen anderem Ende eine Vorrichtung 41, 42, 43 angreift (beispielsweise ein Hydraulikzylinder), die ebenfalls am oberen Rahmen 50 befestigt ist und mit deren Hilfe der Schwenkarm und damit die obere Walze ...A relativ zur jeweils unteren Walze ...B verschwenkt werden kann, wobei insbesondere der Abstand der beiden Walzen und damit der Preßspalt für die zwischen den beiden Walzen durchgeführten beiden Filterbänder 80, 90 definiert wird.

Durch geeignete, in Fig. 1 nicht dargestellte Horizontalführungen kann jede der unteren Preßwalzen ...B horizontal verschoben werden, also in einer Richtung im wesentlichen tangential zur jeweils oberen Preßwalze ...A. Bei den in Fig. 1 und den nachfolgenden Ausführungsbeispielen dargestellten Lösungen sind hierbei Umschlingungswinkel der Filterbänder um jede Walze von mindestens 180° gewählt. Dem letzten Preßwalzenpaar 30 ist ein zusätzliches Trockenband 60 zugeordnet, beispielsweise ein Filzband, sowie eine zusätzliche Trockenwalze 95. Das Trockenband 60 dient zur Entfernung von Restfeuchte auf dem Filterband 80, die Trockenwalze 95 zur Entfernung von Restfeuchtigkeit auf der Unterseite des Filterbandes 90.

Beim dargestellten Ausführungsbeispiel handelt es sich im wesentlichen um eine horizontal arbeitende Presse, es ist jedoch erkennbar ohne weiteres auch möglich, die gesamte Presse oder die Anordnung der Walzenpaare 10,20,30 ganz oder teilweise in die Vertikale zu verlagern, je nachdem wie dies die räumlichen Erfordernisse im konkreten Anwendungsfall vorgeben.

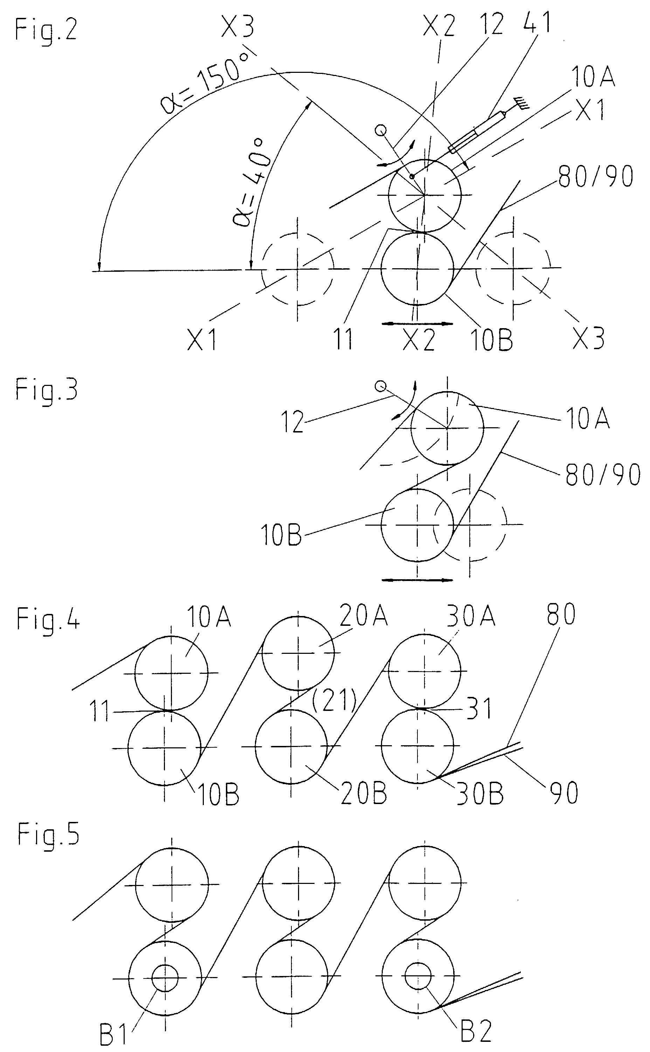

Figur 2 zeigt schematisch die Funktionsweise der beiden Walzen eines Walzenpaares am Beispiel der oberen Preßwalze 10A und der unteren Preßwalze 10B des ersten Walzenpaares 10. Bei der ausgezogen dargestellten Position der beiden Walzen 10A,10B befinden diese sich im wesentlichen übereinander, das heißt der Winkel (für diese Position nicht eingezeichnet) der Verbindungslinie X2-X2 der Achsen dieser beiden Walzen mit der Horizontalen (dem Rahmen 40 in Figur 1) beträgt hier etwa 90°, die beiden gestrichelt dargestellten Positionen der unteren Preßwalze 10B zeigen Extrempositionen, wo die jeweiligen Verbindungslinien X1-X1 bzw. X3-X3 einen Winkel von 150° bzw. 40° mit der Horizontalen bilden. Beim weitaus größten Einstellbereich dieser Winkel stellen sich Umschlingungswinkel der beiden Filterbänder um beide Preßwalzen von mehr als 180° ein. Der Schwenkarm 12 ist hier nur schematisch dargestellt, ebenso die Vorrichtung 41 in Form eines Zylinders, mit der der Schwenkarm 12 kräftemäßig beaufschlagt wird und somit die obere Preßwalze 10A in Richtung des Doppelpfeiles auf einem Kreisbogenabschnitt verschwenkbar ist, wobei die Lagerung des Schwenkarms 12 so gewählt ist, daß durch Betätigung des Schwenkhebels sowohl Positionen einstellbar sind wie in Figur 2 dargestellt, wo die obere Preßwalze 10A praktisch mit Preßspalt 0 auf der unteren Preßwalze 10B aufsitzt, als auch Positionen, wie in Figur 3 dargestellt, wo die obere Preßwalze 10A von der unteren Preßwalze 10B abgehoben ist und somit kein Preßspalt mehr zwischen diesen beiden Walzen definiert ist. Beim letztgenannten Ausführungsbeispiel gemäß der Figur 3 zeigt die gestrichelt dargestellte Positionierung der unteren Preßwalze 10B, daß in einem solchen Betriebsfall die Verschiebung der unteren Preßwalze 10B ausschließlich zu einer Einstellung der Umschlingungswinkel beider Walzen führt.

Die kräftemäßig definierbare Pendelhalterung der oberen Preßwalze 10A in Verbindung mit der im wesentlichen tangentialen Verschiebung der unteren Preßwalze führt somit zu einer Vielzahl von relativen Positionierungen dieser beiden Preßwalzen zueinander mit der daraus resultierenden Möglichkeit, die für jedes Preßgut in jeder Preßstufe erforderliche Kombination von Flächenpressung und Linienpressung (Preßspalt), auf einfachste Weise vorzugeben.

Im Zusammenhang mit den Figuren 4-10 werden nun noch konkrete Anwendungsbeispiele und bevorzugte Ausführungsbeispiele von Anordnungen von Preßwalzenpaaren gemäß den Figuren 2 und 3 gegeben:

Figur 4 zeigt eine Anordnung von drei Preßwalzenpaaren (dies könnten beispielsweise die in Figur 1 in der Presse dargestellten Preßwalzenpaare sein), wobei hier die beiden äußeren Preßwalzenpaare mit einem minimalen Preßspalt gefahren werden, das mittlere Preßwalzenpaar 20A,20B ohne Preßspalt; diese Anordnung stellt eine gewisse Schonung des Preßgutes zwischen der Preßwalze 10B und der Preßwalze 30A dar, da hier lediglich Flächenpressungs- und Walkeffekte auf das Preßgut ausgeübt werden. In diesem Zusammenhang soll nochmals auf die bei dieser Anordnung entstehenden großen Umschlingungswinkel von über 180° hingewiesen werden, sowie auf die "freien", d.h. geradlinigen Filterbandstrecken zwischen der jeweiligen Ausgangswalze eines Preßwalzenpaares und der nachfolgenden Eingangswalze des nächsten Preßwalzenpaares.

Figur 5 zeigt eine Variante der Anordnung gemäß Figur 4, wobei keine Preßspalten eingestellt sind, sondern das erste und letzte Preßwalzenpaar mit einer Bremsanordnung B1,B2 versehen ist, die zu einer Erhöhung der Bandspannung und der Flächenpressung im Bereich des mittleren Preßwalzenpaars führt.

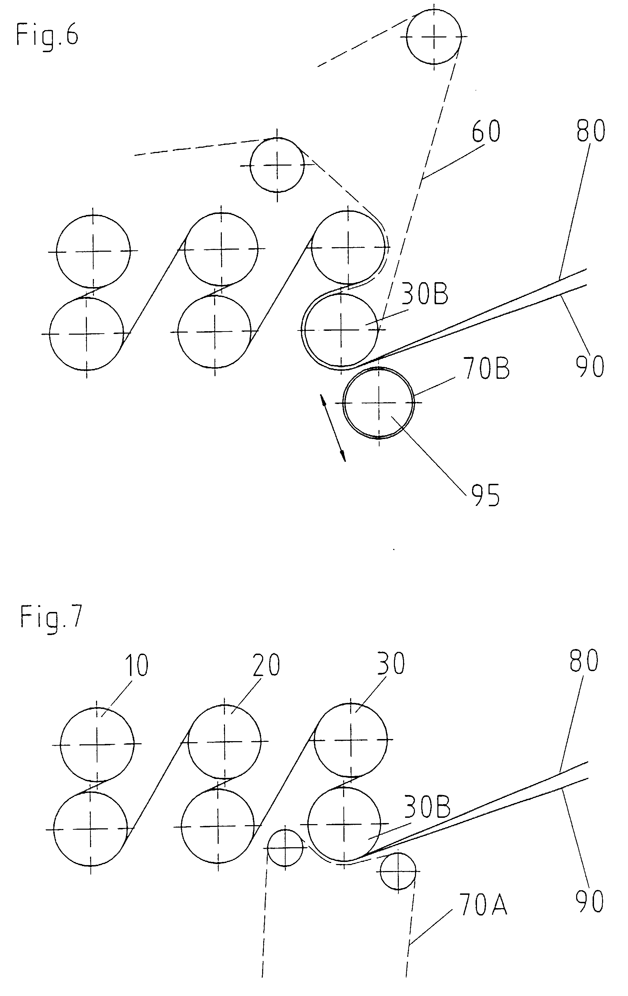

Figur 6 zeigt die Ergänzung einer Anordnung von drei Preßwalzenpaaren mit einem ausgangsseitigen Trockenband 60 (vergl. auch Figur 1), das auf der letzten Ausgangswalze 30B geführt ist und somit Restfeuchtigkeit auf der Oberseite des oberen Filterbandes 80 abnimmt. Zur Entfernung von Restfeuchte auf der Unterseite des unteren Filterbandes 90 ist eine Trockenwalze 95 verschwenkbar gehalten (siehe Figur 1), die an die Unterseite des Filterbandes 90 anpreßbar ist. Ein Trocknungsband 70B ist auf der Trocknungswalze 95 zu diesem Zweck aufgebracht, beispielsweise ein Filzbelag.

Figur 7 zeigt eine Variante zur Trockenwalze 95, nämlich ein Trocknungsband 70A (beispielsweise Filzband), das mit Hilfe von zwei Umlenkwalzen einen Teilbereich der Ausgangspreßwalze 30B von unten umschlingt, so daß im Gegensatz zu der im wesentlichen linienförmigen Kontaktfläche der Trocknungswalze 95 hier eine großflächigere Abtrocknung erfolgen kann.

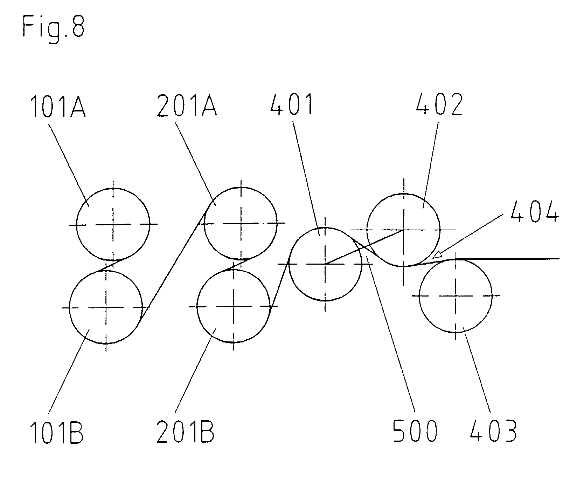

Figur 8 zeigt eine Anordnung mit zwei Preßwalzenpaaren 101A,101B bzw. 201A, 201B, denen drei weitere Preßwalzen 401,402,403 nachgeschaltet sind, wobei die Preßwalzen 401,402 an einem gemeinsamen Schwenkrahmen 500 gehalten sind (Tandemwalze) und die Preßwalze 403 als Ausgangspreßwalze separat verschiebbar ist, und somit ein weiterer Preßspalt 404 einstellbar ist, jedoch ohne wesentlichen Umschlingungsbereich des Filterbandes auf der Ausgangspreßwalze 403.

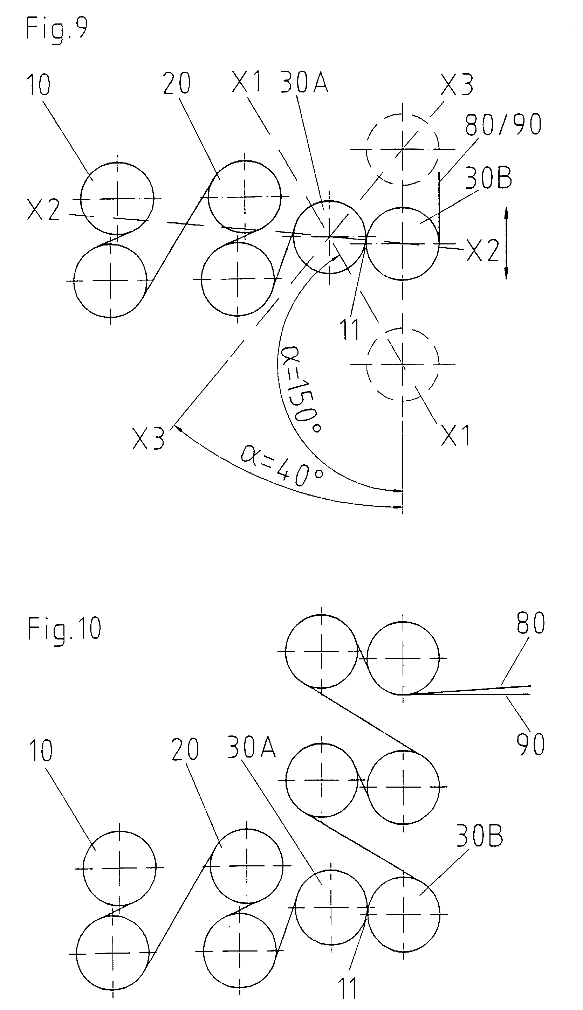

Figur 9 zeigt wiederum drei Preßwalzenpaare, wobei jedoch das letzte Preßwalzenpaar hinsichtlich der Verschieberichtung der Ausgangspreßwalze 30B um 90° gegen die Achse der ersten beiden Preßwalzenpaare 10,20 gekippt ist, so daß die hier entsprechend der Figur 2 eingezeichneten Winkel relativ zur Vertikalen V eingezeichnet sind.

Schließlich zeigt Figur 10 eine Anordnung von fünf Preßwalzenpaaren, die ersten beiden horizontal hintereinander, die letzten drei vertikal übereinander, eine Anordnung, die eine besonders kompakte Bauform bei hohem Trocknungsgrad sicherstellt.

Bei den Darstellungen der Figuren 3-10 sind die Achsen und Schwenkarme und Verschiebeführungen nicht eingezeichnet, da sich hier verschiedene konstruktive Lösungen anbieten, wie sie im Stand der Technik bekannt sind.

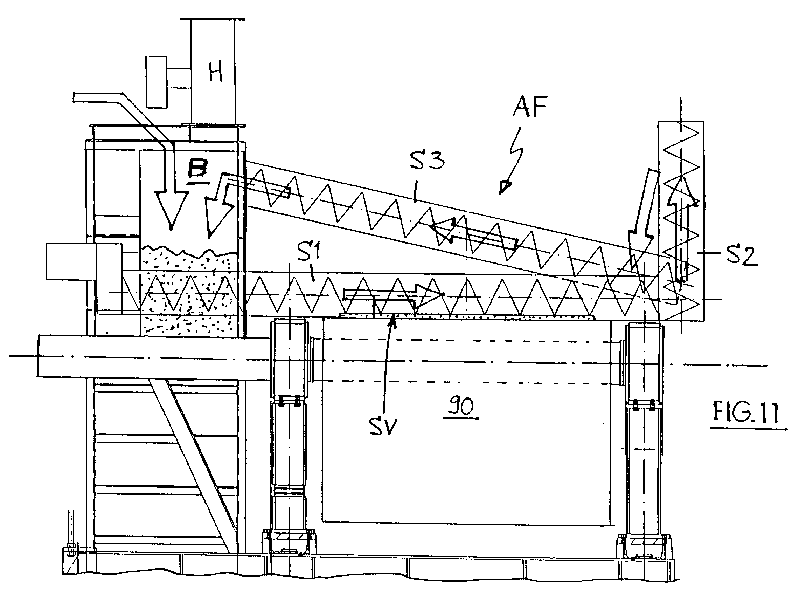

Figur 11 zeigt eine bevorzugte Ausführung der Aufgabestation AF: Eine Anordnung von Förderschnecken S1,S2,S3 ermöglicht einen Kreislauf des auf das untere Filterband 90 aufzubringenden Preßgutes, das in einen Behälter B eingefüllt wird, gegebenenfalls über eine Zerkleinerungsstation (z.B. Hammermühle H). Die erste Förderschnecke S1 wird vom Behälter B beschickt und liegt horizontal quer über dem Filterband 90. An der Unterseite des zylindrischen Mantels ist ein Zylindermantelausschnitt SV vorgesehen, dessen Größe bzw. Öffnungswinkel einstellbar ist, wodurch die Schichtdicke des Preßgutes auf dem Filterband 90 vorgebbar ist. Entsprechend dieser Einstellung wird die gewünschte Menge des Preßgutes auf das Filterband abgegeben. Hierbei wird die erste Förderschnecke S1 so schnell gefahren, daß die Fördermenge über der Abgabemenge auf das Filterband liegt, so daß eine vollständige und gleichmäßige Preßgutaufgabe gewährleistet ist. Die am Ende der Abgabeöffnung SV überschüssige Menge an Preßgut wird über zwei weitere Förderschnecken S2,S3 wieder dem Behälter B zugeführt, so daß insofern ein Förderkreislauf gebildet wird, der in Figur 11 durch die Pfeile symbolisiert wird.

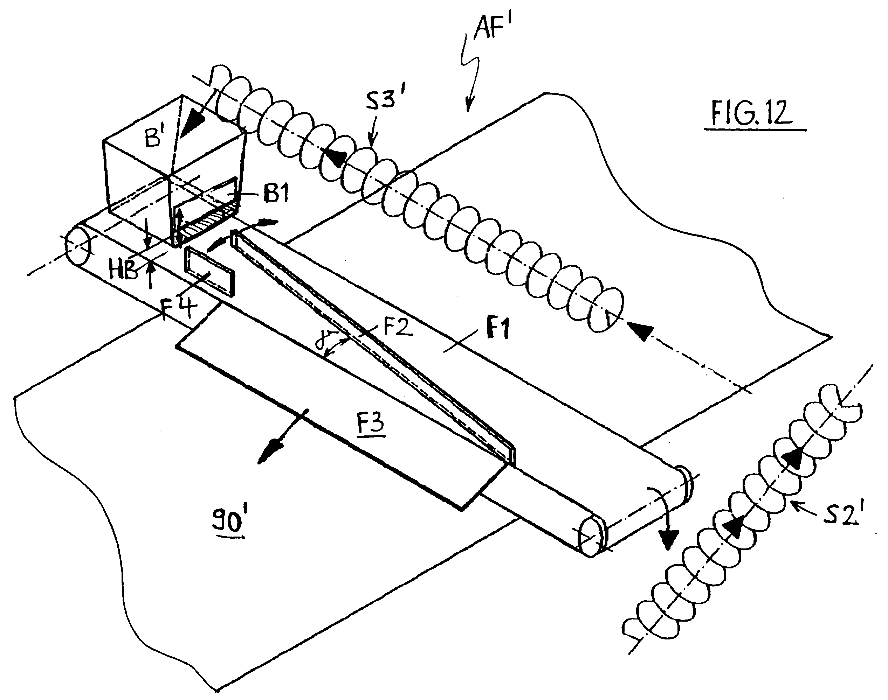

Anstelle der Förderschnecken lassen sich auch andere Fördereinheiten einsetzen, z.B. anstelle der ersten Förderschnecke S1 ein Förderband mit Abstreifvorrichtungen, wie dies in Figur 12 dargestellt ist:

Das Förderband F1 liegt ebenfalls quer zur Förderrichtung des Förderbandes 90'. Der Behälter B' liegt am Aufgabeende des Förderbandes F1 und das Preßgut wird über eine bodenseitige Öffnung vom Behälter B' auf das Förderband F1 aufgegeben. Die Öffnungshöhe HB ist dabei von einer verstellbaren Klappe oder Rolladen B1 vorgegeben. Auf dem Förderband F1 ist ein Verteilblech F2 schwenkbar gehalten, derart, daß sein Öffnungswinkel γ in Richtung zum Behälter B' einstellbar ist. Dieser Öffnungswinkel γ und die Öffnungshöhe HB der Ausgabeöffnung des Behälters B' bestimmen zusammen dann diejenige Menge an Preßgut, die über ein Aufgabeblech F3 auf das Filterband 90' gelangt. Hinter dem Abstreifblech F2 vorbeigeführtes Preßgut gelangt dann wie beim oben beschriebenen Ausführungsbeispiel auf die nachgeschalteten Förderschnecken S2',S3' und wird wieder in den Behälter B' eingegeben. Zur Definition der Aufgabebreite dient ein Leitblech F4, das verhindert, daß unerwünschte Preßgutanteile auf den Randbereich des Filterbandes 90' aufgegeben werden.

## Patentansprüche

1. Vorrichtung zur Entwässerung von Suspensionen wie Schlamm oder ähnlich entwässerbarem Gut, mit mehreren Walzen und zwei Filterbändern, die S-förmig um die Walzen geführt sind und das zu entwässernde Gut zwischen sich einschließen,
dadurch gekennzeichnet, daß mindestens ein Walzenpaar (10,20,30) vorgesehen ist, zwischen dessen Walzen ein Preßspalt (11,21,31) liegt, der hinsichtlich seiner Breite und der Kraftbeaufschlagung des Filtergutes mittels einer Verschwenkung der einen Walze (10A, 20A, 30A) und einer Verschiebung der anderen Walze (10B, 20B, 30B) des Walzenpaares einstellbar ist, wozu die verschwenkbare Walze (10A, 20A, 30A) an einem Schwingarm (12,22,32) gehalten ist und an dieser Walze oder dem Schwingarm eine äußere Kraft anliegt, mit der die Position dieser Walze zur anderen Walze und damit der Preßspalt und die von diesem ausgeübte Linienpressung einstellbar ist, und wozu die verschiebbare Walze (10B,20B,30B) parallel zur Tangente an die verschwenkbare Walze verschiebbar und festsetzbar ist, wodurch der Umschlingungswinkel (..) und die Flächenpressung der beiden Walzen einstellbar ist.

2. Vorrichtung nach Anspruch 1, dadurch gekennzeichnet, daß die Eingangswalze (10A,20A,30A) (in Bandbewegungsrichtung vordere) an dem Schwingarm (12,22,32) gehalten und die Ausgangswalze (10B,20B,30B) des Walzenpaares (10,20,30) linear verschiebbar ist.

3. Vorrichtung nach Anspruch 1, dadurch gekennzeichnet, daß jedes Walzenpaar (10,20,30) zwischen zwei Rahmen (40,50) gehalten ist, wobei an einem Rahmen (40) jeweils ein hydraulisch, pneumatisch, elektrisch oder manuell betriebene Vorrichtung (41,42,42) gehalten ist, die den Schwingarm (12,22,32) oder die an diesem gehaltene Walze (10A,20A,30A) beaufschlagt.

4. Vorrichtung nach Ansprüchen 2 und 3, dadurch gekennzeichnet, daß die beiden Rahmen (40,50) parallel zu einander, insbesondere horizontal oder vertikal, liegen und die Eingangswalze (...A) gegenüber der Ausgangswalze (...B) angeordnet ist, wobei der Winkel ( α ) zwischen der Verbindungslinie (x-x) der beiden Walzen (...A,...B) und dem Rahmen (40) der Ausgangswalze (...B) zwischen 30° - 160° einstellbar und fixierbar ist.

5. Vorrichtung nach Ansprüchen 1 bis 4, dadurch gekennzeichnet, daß mehrere Walzenpaare (10,20 und 30) in Bandlaufrichtung aufeinanderfolgend zwischen den Rahmen (40,50) gehalten sind, und daß deren Linienpressung und Bandumschlingung unabhängig voneinander einstellbar sind.

6. Vorrichtung nach Anspruch 5, dadurch gekennzeichnet, daß zwischen der Ausgangswalze (....B) eines Walzenpaares (10,20) und der Eingangswalze (....A) des in Bandlaufrichtung nachfolgenden Walzenpaares (20,30) eine geradlinige Filterbandstrecke (ohne Preßspalt) liegt.

7. Vorrichtung nach Anspruch 5, dadurch gekennzeichnet, daß zwischen der Eingangswalze (....A) und der Ausgangswalze (....B) desselben Walzenpaares (10,20,30) durch Abhebung der Eingangswalze (....A) eine geradlinige Filterbandstrecke (ohne Preßspalt) liegt.

8. Vorrichtung nach Ansprüchen 5 bis 7, dadurch gekennzeichnet, daß 3 Walzenpaare vorgesehen sind, wobei die beiden äußeren Walzenpaare (10,30) als Bremswalzenpaare dienen und das mittlere Walzenpaar (20) ohne Preßspalt (ohne Linienpressung) eingestellt ist.

9. Vorrichtung nach Anspruch 1, dadurch gekennzeichnet, daß bei mindestens einem Walzenpaar (10,20,30) zusätzlich zu den beiden Filterbändern (80,90) ein mitlaufendes, erstes Trocknungsband (60) derart geführt ist, daß es Restfeuchte von dem auf zur Ausgangswalze (....B) aufliegenden, inneren Filterband (80) aufnimmt und entfernt.

10. Vorrichtung nach Anspruch 5, dadurch gekennzeichnet, daß bei mindestens einem Walzenpaar (10,20,30) ein zweites mitlaufendes Trocknungsband (70A) zusätzlich zu den beiden Filterbändern (80,90) derart geführt ist, daß es Restfeuchte von der Außenseite des auf der Ausgangswalze (....B) aufliegenden äußeren Filterband (90) aufnimmt und entfernt.

11. Vorrichtung nach Anspruch 10, dadurch gekennzeichnet, daß das mitlaufende Trocknungsband (70B) auf einer Trocknungswalze (95) aufgebracht ist.

12. Vorrichtung nach Ansprüchen 9 bis 11, dadurch gekennzeichnet, daß das Trocknungsband (60,70A,70B) ein Filzband ist.

13. Vorrichtung nach Anspruch 5, dadurch gekennzeichnet, daß dem ersten Walzenpaar (10) eine Hammermühle (H) als Vorentwässerungseinheit vorgeschaltet ist, die zusammen mit einer Fördereinheit eine Aufgabestation (AF) bildet.

14. Vorrichtung nach Anspruch 4, dadurch gekennzeichnet, daß die Verbindungslinien (x-x) der Walzenachsen der Walzenpaare (10,20,30) im wesentlichen parallel zueinander verlaufen.

15. Vorrichtung nach Ansprüchen 5 bis 7, dadurch gekennzeichnet, daß zwei Walzenpaare (101, 201) mit im wesentlichen parallelen Verbindungslinien (x-x) ihrer Walzen (101A,101B;201A,201B) vorgesehen sind, die von mindestens zwei Walzen gefolgt werden.

16. Vorrichtung nach Anspruch 15, dadurch gekennzeichnet, daß die beiden ersten der nachfolgenden Walzen (401,402) an einem gemeinsamen Verbindungsrahmen (500) schwenkbar gehalten sind.

17. Vorrichtung nach Ansprüchen 15 und 16, dadurch gekennzeichnet, daß eine dritte Walze (403) als Ausgangswalze am unteren Rahmen (59) gehalten ist.

18. Vorrichtung nach Anspruch 17, dadurch gekennzeichnet, daß die dritte Walze (403) verschiebbar gegen eine der vorhergehenden Walzen (401,402) unter Bildung eines weiteren Preßspaltes (404) gehalten ist.

19. Vorrichtung nach einem der vorhergehenden Ansprüche, dadurch gekennzeichnet, daß der Umschlingungswinkel der Filterbänder um zumindest eine Walze des Walzenpaares mindestens 180° beträgt.

20. Vorrichtung nach einem der vorhergehenden Ansprüche, dadurch gekennzeichnet, daß die Aufgabestation (AF) für das Preßgut von einer Anordnung von Fördereinheiten, insbesondere Förderschnecken (S1,S2,S3) gebildet wird, mit denen das Preßgut gleichmäßig mit vorgebbarer Schichtdicke auf dem unteren Filterband (90) aufgebracht und überschüssiges Preßgut wieder zurückgefördert wird.

21. Vorrichtung nach Anspruch 20, dadurch gekennzeichnet, daß eine erste Förderschnecke (S1) horizontal über einem der Filterbänder (90) liegt und auf der Unterseite ihres zylindrischen Mantels einen einstell baren Ausschnitt (SV) in Form eines Zylindermantelausschnitts als Abgabeöffnung aufweist.

22. Vorrichtung nach Anspruch 21, dadurch gekennzeichnet, daß Anfang und Ende der Förderkette von einem seitlich angeordneten Behälter für das Preßgut (B) gebildet werden, von dem aus die erste Förderschnecke (S1) beschickt wird und in dem die letzte Förderschnecke (S3) endet.

23. Vorrichtung nach Anspruch 20, dadurch gekennzeichnet, daß ein Förderband (F1) horizontal über einem der Filterbänder (90') liegt, auf dessen Oberseite ein Abstreifelement (F2) zur Aufgabe des Preßgutes gehalten ist.

24. Vorrichtung nach Anspruch 23, dadurch gekennzeichnet, daß das Förderband (F1) von einem seitlich oberhalb angeordneten Behälter (B') mit variabler Ausgabeöffnung beschickt wird.

25. Vorrichtung nach Anspruch 23 und 24, dadurch gekennzeichnet, daß das Abstreifelement (F2) an seiner vom Behälter (B') abgewandten Seite angelenkt ist, und gegenüber der Längsachse des Filterbandes (90') einen variablen Winkel ( γ ) bildet.

## Claims

1. Apparatus for dehydrating suspensions such as sludge or similarly dehydratable material, having a plurality of rollers and two filter belts, which are guided around the rollers in an S-shaped manner and enclose therebetween the material to be dehydrated, characterised in that at least one pair of rollers (10,20,30) is provided, a pressure gap (11,21,31) lying between the rollers of said pair and being adjustable, in respect of its width and the loading on the material to be filtered, by means of a pivotal movement of one roller (10A,20A,30A) and a displacement of the other roller (10B,20B,30B) of the pair of rollers, for which purpose the pivotable roller (10A,20A,30A) is retained on a pivotable arm (12,22,32), and an external force is applied to this roller or the pivotable arm, the position of this roller relative to the other roller and, hence, the pressure gap and the linear pressure exerted by said gap being adjustable by means of said external force, and for which purpose the displaceable roller (10B,20B,30B) is displaceable and securable parallel to the tangent line to the pivotable roller, whereby the looping angle (..) and the surface pressure of the two rollers are adjustable.

2. Apparatus according to claim 1, characterised in that the feed roller (10A,20A,30A) (the front one when viewed with respect to the direction of movement of the belt) is retained on the pivotable arm (12,22,32), and the delivery roller (10B,20B,30B) of the pair of rollers (10,20,30) is linearly displaceable.

3. Apparatus according to claim 1, characterised in that each pair of rollers (10,20,30) is retained between two frames (40,50), a hydraulically, pneumatically, electrically or manually operated device (41,42,43) being retained on one frame (40) in each case, which device acts on the pivotable arm (12,22,32) or the roller (10A,20A,30A) retained thereon.

4. Apparatus according to claims 2 and 3, characterised in that the two frames (40,50) lie parallel to each other, more especially horizontally or vertically, and the feed roller (...A) is disposed opposite the delivery roller (...B), the angle (α) between the connecting line (x-x) of the two rollers (...A, ...B) and the frame (40) of the delivery roller (...B) being adjustable and securable between 30° and 160°.

5. Apparatus according to claims 1 to 4, characterised in that several pairs of rollers (10,20 and 30) are retained sequentially between the frames (40,50) when viewed with respect to the direction of travel of the belt, and in that the linear pressure on said pairs of rollers and the looping of the belt therearound are adjustable independently of each other.

6. Apparatus according to claim 5, characterised in that a rectilinear filter belt portion (without a pressure gap) lies between the delivery roller (...B) of one pair of rollers (10,20) and the feed roller (...A) of the subsequent pair of rollers (20,30) when viewed with respect to the direction of travel of the belt.

7. Apparatus according to claim 5, characterised in that a rectilinear filter belt portion (without a pressure gap) lies between the feed roller (...A) and the delivery roller (...B) of the same pair of rollers (10,20,30) due to the removal of the feed roller (...A).

8. Apparatus according to claims 5 to 7, characterised in that 3 pairs of rollers are provided, the two outer pairs of rollers (10,30) serving as pairs of braking rollers, and the middle pair of rollers (20) without a pressure gap being adjusted (without linear pressure).

9. Apparatus according to claim 1, characterised in that, in the case where there is at least one pair of rollers (10,20,30) in addition to the two filter belts (80,90), a jointly travelling first drying belt (60) is guided in such a manner that it absorbs and removes residual moisture from the internal filter belt (80) resting on the delivery roller (...B).

10. Apparatus according to claim 5, characterised in that, in the case where there is at least one pair of rollers (10,20,30) in addition to the two filter belts (80, 90), a second jointly travelling drying belt (70A) is guided in such a manner that it absorbs and removes residual moisture from the external surface of the external filter belt (90) resting on the delivery roller (...B).

11. Apparatus according to claim 10, characterised in that the jointly travelling drying belt (70B) is mounted on a drying roller (95).

12. Apparatus according to claims 9 to 11, characterised in that the drying belt (60,70A,70B) is a felt belt.

13. Apparatus according to claim 5, characterised in that a hammer mill (H), as the preliminary dehydration unit, is connected upstream of the first pair of rollers (10) and, together with a conveying unit, forms a loading station (AF).

14. Apparatus according to claim 4, characterised in that the connecting lines (x-x) between the roller axes of the pairs of rollers (10,20,30) extend substantially parallel to one another.

15. Apparatus according to claims 5 to 7, characterised in that two pairs of rollers (101,201) are provided with substantially parallel connecting lines (x-x) between their rollers (101A,101B;201A,201B), which are followed by at least two rollers.

16. Apparatus according to claim 15, characterised in that the first two of the following rollers (401,402) are pivotably retained on a common connection frame (500).

17. Apparatus according to claims 15 and 16, characterised in that a third roller (403) is retained as the delivery roller on the lower frame (59).

18. Apparatus according to claim 17, characterised in that the third roller (403) is displaceably retained against one of the preceding rollers (401,402) so as to form an additional pressure gap (404).

19. Apparatus according to one of the preceding claims, characterised in that the looping angle of the filter belts around at least one roller of the pair of rollers amounts to at least 180°.

20. Apparatus according to one of the preceding claims, characterised in that the loading station (AF) for the material to be pressed is formed by an arrangement of conveying units, more especially screw conveyors (S1,S2,S3), by means of which the material to be pressed is uniformly applied to the lower filter belt (90) with a prescribable layer thickness, and excess material to be pressed is conveyed back again.

21. Apparatus according to claim 20, characterised in that a first screw conveyor (S1) lies horizontally above one of the filter belts (90) and has an adjustable cutaway portion (SV), in the form of a cylinder casing cutaway portion, as the discharge aperture on the underside of its cylindrical casing.

22. Apparatus according to claim 21, characterised in that the start and end of the conveying chain are formed by a laterally disposed container (B) for the material to be pressed, the first screw conveyor (S1) being loaded from said container, and the last screw conveyor (S3) terminating in said container.

23. Apparatus according to claim 20, characterised in that a conveyor belt (F1) lies horizontally above one of the filter belts (90'), a scraper means (F2) for the loading of the material to be pressed being retained on the upper surface of said conveyor belt.

24. Apparatus according to claim 23, characterised in that the conveyor belt (F1) is loaded from a container (B'), which is disposed laterally above and is provided with a variable dispensing aperture.

25. Apparatus according to claims 23 and 24, characterised in that the scraping element (F2) is pivotally mounted on its side remote from the container (B') and forms a variable angle (γ) relative to the longitudinal axis of the filter belt (90').

## Revendications

1. Appareil pour la déshydratation de suspensions telles que boues ou matières déshydratables de façon semblable, comportant plusieurs rouleaux et deux bandes filtrantes qui passent en S autour de ces rouleaux et enferment entre elles la matière à déshydrater,
caractérisé par le fait qu'il est prévu au moins une paire de rouleaux (10, 20, 30) entre les rouleaux de laquelle existe un interstice de pressage (11, 21, 31) qui est réglable, en ce qui concerne sa largeur et la force appliquée à la matière filtrée, au moyen d'un basculement d'un rouleau (10A, 20A, 30A) et d'une translation de l'autre rouleau (10B, 20B, 30B) de la paire de rouleaux, et pour cela, le rouleau basculant (10A, 20A, 30A) est monté sur une biellette (12, 22, 32) et à ce rouleau ou à la biellette est appliquée une force extérieure qui permet de régler la position de ce rouleau par rapport à l'autre rouleau et ainsi l'interstice de pressage et la pression linéaire exercée par celui-ci, et le rouleau translatable (10B, 20B, 30B) peut être translaté parallèlement à la tangente au rouleau basculant et immobilisé, ce qui permet de régler l'angle embrassé (..) et la pression superficielle des deux rouleaux.

2. Appareil selon la revendication 1, caractérisé par le fait que le rouleau d'entrée (10A, 20A, 30A) (le rouleau avant dans la direction de mouvement des bandes) est monté sur la biellette (12, 22, 32) et le rouleau de sortie (10B, 20B, 30B) de la paire de rouleaux (10, 20, 30) est translatable en ligne droite.

3. Appareil selon la revendication 1, caractérisé par le fait que chaque paire de rouleaux (10, 20, 30) est montée entre deux cadres (40, 50), et sur un cadre (40) est monté pour celle-ci un appareil à commande hydraulique, pneumatique, électrique ou manuelle (41, 42, 43) qui agit sur la biellette (12, 22, 32) ou sur le rouleau (10A, 20A, 30A) monté sur celle-ci.

4. Appareil selon les revendications 2 et 3, caractérisé par le fait que les deux cadres (40, 50) sont parallèles, en particulier horizontaux ou verticaux, et le rouleau d'entrée (...A) est placé en face du rouleau de sortie (...B), l'angle (α) entre la ligne (x-x) joignant les deux rouleaux (...A, ...B) et le cadre (40) du rouleau de sortie (...B) pouvant être réglé et fixé entre 30° et 160°.

5. Appareil selon les revendications 1 à 4, caractérisé par le fait que plusieurs paires de rouleaux (10, 20 et 30) sont montées entre les cadres (40, 50) les unes derrière les autres dans la direction de marche des bandes, et que leur pression linéaire et leur embrassement par les bandes sont réglables indépendamment.

6. Appareil selon la revendication 5, caractérisé par le fait qu'entre le rouleau de sortie (...B) d'une paire de rouleaux (10, 20) et le rouleau d'entrée (...A) de la paire de rouleaux suivante dans la direction de marche des bandes (20, 30) se trouve un tronçon rectiligne de bandes filtrantes (sans interstice de pressage).

7. Appareil selon la revendication 5, caractérisé par le fait qu'entre le rouleau d'entrée (...A) et le rouleau de sortie (...B) de la même paire de rouleaux (10, 20, 30) se trouve un tronçon rectiligne de bandes filtrantes (sans interstice de pressage) formé par écartement du rouleau d'entrée (...A).

8. Appareil selon les revendications 5 à 7, caractérisé par le fait qu'il est prévu trois paires de rouleaux, les deux paires de rouleaux extérieures (10, 30) servant de paires de rouleaux de freinage et la paire de rouleaux du milieu (20) étant réglée sans interstice de pressage (sans pression linéaire).

9. Appareil selon la revendication 1, caractérisé par le fait que sur au moins une paire de rouleaux (10, 20, 30) passe, en plus des deux bandes filtrantes (80, 90), une première bande de séchage (60) qui accompagne celles-ci et absorbe et évacue l'humidité résiduelle de la bande filtrante intérieure (80) s'appuyant sur le rouleau de sortie (...B).

10. Appareil selon la revendication 5, caractérisé par le fait que sur au moins une paire de rouleaux (10, 20, 30) passe, en plus des deux bandes filtrantes (80, 90), une deuxième bande de séchage (70A) qui accompagne celles-ci et absorbe et évacue l'humidité résiduelle de la face extérieure de la bande filtrante extérieure (90) s'appuyant sur le rouleau de sortie (...B).

11. Appareil selon la revendication 10, caractérisé par le fait que la bande de séchage (70B) qui accompagne les bandes filtrantes est appliquée sur un rouleau de séchage (95).

12. Appareil selon les revendications 9 à 11, caractérisé par le fait que la bande de séchage (60, 70A, 70B) est une bande de feutre.

13. Appareil selon la revendication 5, caractérisé par le fait qu'avant la première paire de rouleaux (10) est placé un broyeur à marteaux (H) qui constitue un dispositif de prédéshydratation et forme un poste de chargement (AF) avec un dispositif transporteur.

14. Appareil selon la revendication 4, caractérisé par le fait que les lignes (x-x) joignant les axes des rouleaux des paires de rouleaux (10, 20, 30) sont sensiblement parallèles.

15. Appareil selon les revendications 5 à 7, caractérisé par le fait qu'il est prévu deux paires de rouleaux (101, 201) avec lignes (x-x) joignant leurs rouleaux (101A, 101B ; 201A, 201B) sensiblement parallèles, qui sont suivies d'au moins deux rouleaux.

16. Appareil selon la revendication 15, caractérisé par le fait que les deux premiers des rouleaux suivants (401, 402) sont montés basculants sur un cadre de liaison commun (500).

17. Appareil selon les revendications 15 et 16, caractérisé par le fait qu'un troisième rouleau (403) est monté comme rouleau de sortie sur le cadre inférieur (59).

18. Appareil selon la revendication 17, caractérisé par le fait que le troisième rouleau (403) est monté translatable vers un des rouleaux précédents (401, 402) avec formation d'un autre interstice de pressage (404).

19. Appareil selon l'une des revendications précédentes, caractérisé par le fait que l'angle embrassé par les bandes filtrantes sur au moins un rouleau de la paire de rouleaux est d'au moins 180°.

20. Appareil selon l'une des revendications précédentes, caractérisé par le fait que le poste de chargement (AF) pour la matière à presser est formé par un système de dispositifs transporteurs, en particulier de vis transporteuses (S1, S2, S3), au moyen desquels la matière à presser est appliquée uniformément sur la bande filtrante inférieure (90) avec une épaisseur de couche pouvant être fixée à l'avance et la matière à presser en excès est renvoyée en arrière.

21. Appareil selon la revendication 20, caractérisé par le fait qu'une première vis transporteuse (S1) est placée horizontalement au-dessus d'une des bandes filtrantes (90) et présente sur le dessous de son enveloppe cylindrique une partie réglable (SV) en forme de partie de surface latérale de cylindre qui constitue un orifice d'émission.

22. Appareil selon la revendication 21, caractérisé par le fait que le début et la fin de la chaîne de transport sont formés par un réservoir placé latéralement pour la matière à presser (B) d'où la première vis transporteuse (S1) est chargée et dans lequel se termine la dernière vis transporteuse (S3).

23. Appareil selon la revendication 20, caractérisé par le fait qu'une bande transporteuse (F1) est placée horizontalement au-dessus d'une des bandes filtrantes (90'), et sur le côté supérieur de cette bande transporteuse (F1) est monté un élément racleur (F2) pour le chargement de la matière à presser.

24. Appareil selon la revendication 23, caractérisé par le fait que la bande transporteuse (F1) est chargée par un réservoir placé latéralement au-dessus (B') à orifice de sortie variable.

25. Appareil selon les revendications 23 et 24, caractérisé par le fait que l'élément racleur (F2) est articulé sur son côté opposé au réservoir (B') et fait un angle variable (y) avec l'axe longitudinal de la bande filtrante (90').
